# EUROPEAN PATENT SPECIFICATION

(11) **EP 1 968 389 B1**
(45) Date of publication and mention of the grant of the patent: **13.06.2018**
(21) Application number: 07700549.4
(22) Date of filing: 05.01.2007
(51) Int. Cl.: A23L 5/10, A23L 5/20, A23L 7/13, A23L 7/143, A23L 19/18, A21D 8/04

(54) **METHODS FOR REDUCING ASPARAGINE IN A DOUGH FOOD COMPONENT**
VERFAHREN ZUR ASPARAGINREDUKTION IN EINEM TEIG-NAHRUNGSMITTEL
METHODES DE REDUCTION DU NIVEAU D'ASPARAGINE DANS UN COMPOSANT ALIMENTAIRE A BASE DE PATE

(30) Priority: 05.01.2006 US 756509 P
(43) Date of publication of application: 17.09.2008
(73) Proprietor: Kellogg Europe Trading Limited, Dublin 2 (IE)
(72) Inventor: CORRIGAN, Patrick, Joseph, Glendale, Ohio 45246 (US)
(74) Representative: Cabinet Plasseraud
(86) International application number: PCT/IB2007/050042
(87) International publication number: WO 2007/077545

(56) References cited:
- WO-A-2004/026043
- WO-A-2004/030468
- WO-A-2004/032648
- WO-A-2006/128843
- WO-A2-2006/026278
- US-A1- 2004 101 607
- US-A1- 2004 265 429

## Description

### FIELD OF INVENTION

The present invention relates to methods for reducing asparagine in an asparagine-containing dough food component and methods for reducing acrylamide in dough-based food products.

### BACKGROUND OF THE INVENTION

Since the dawn of civilization, carbohydrate-containing foods have been a staple in man's diet. Today, carbohydrate-containing foods such as breads, breakfast cereals, biscuits, crackers, cookies, French fries, cooked starchy vegetables, taco shells, and snack foods are popularly consumed. Although such foods have been part of the human diet for countless years, researchers have only recently discovered that many of these foods contain acrylamide.

In April 2002, the Swedish National Food Administration and researchers from Stockholm University announced their findings that acrylamide, a potentially cancer-causing chemical, is formed in many types of cooked foods. Acrylamide has a carcinogenic potency in rats that is similar to that of other carcinogens in food, but for humans, the relative potency in food is not known. Only limited human population data are available for acrylamide and these provide no evidence of cancer risk from occupational exposure. (FAO/WHO Consultation on the Health Implications of Acrylamide in Food: Summary Report; Geneva, Switzerland, 25-27 June 2002.)

Although further research is needed to assess what health effects, if any, may result from human consumption of acrylamide at the levels commonly found in such foods, many consumers have voiced concern. Accordingly, methods for reducing the level of asparagine in an asparagine-containing dough food component and methods for reducing the level of acrylamide in dough-based food products are desired. WO2004026043 discloses a method for the reduction of acrylamide in food products by adding to a food material an enzyme capable of hydrolyzing the amide group of free asparagine.

### SUMMARY OF THE INVENTION

The invention is defined by the claims.

### BRIEF DESCRIPTION OF THE DRAWINGS

The following Detailed Description may be more fully understood in view of the drawings, in which:
FIG. 1 sets forth a proposed reaction mechanism by which acrylamide forms from asparagine and a carbonyl source (such as glucose). Each of R₁ and R₂ may be H, CH₃, CH₂OH, CH₂(CH₂)ₙCH₃, or any other component making up a reducing sugar; and n is any integer less than 10; and
FIG. 2 sets forth a proposed reaction mechanism by which asparaginase reacts with asparagine to prevent the formation of acrylamide.

### DETAILED DESCRIPTION OF THE INVENTION

As disclosed in detail in Zyzak et al, U.S. Application Serial No. 2004/0058046 A1 ('046) and Zyzak et al, U.S. Application Serial No. 2004/0101607 A1 ('607), asparagine, a naturally occurring amino acid found in virtually all living systems, can form acrylamide when heated. Thus, foods richer in asparagine, when heated, tend to contain higher levels of acrylamide; this is especially the case when asparagine-containing foods are heated in the presence of reducing sugars. Formation of acrylamide has also been found to be higher when foods are cooked to a lower final moisture content.

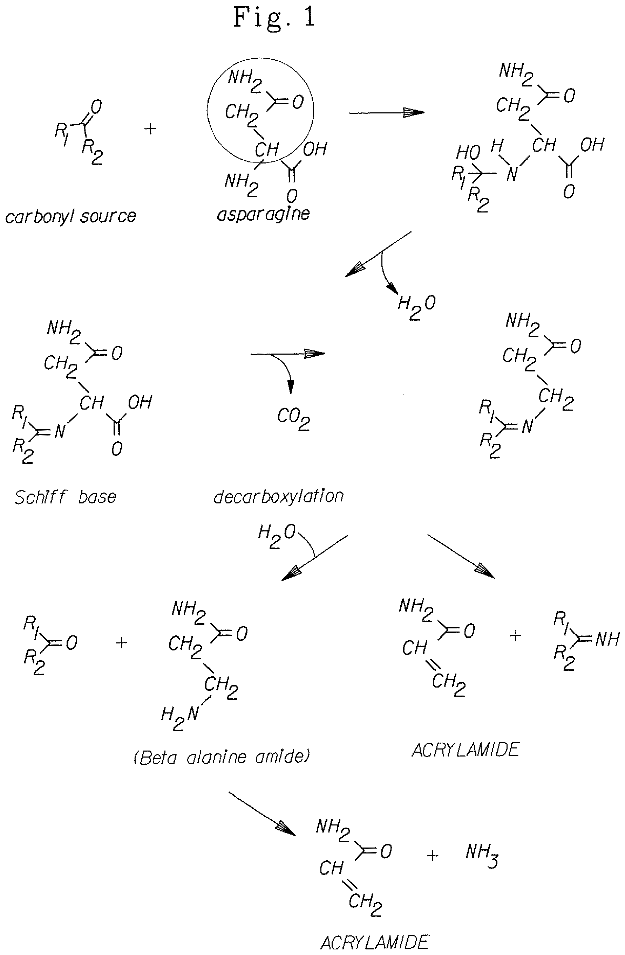

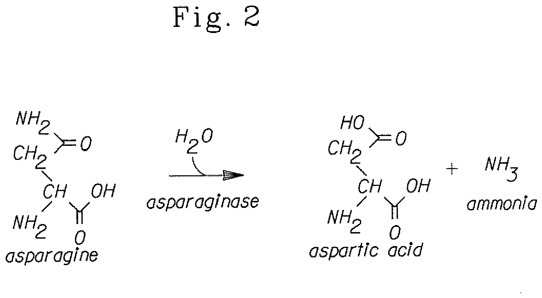

While not wishing to be limited by theory, as disclosed in the '046 and the '607 applications, acrylamide is believed to be formed in food products via the reaction mechanism set forth in FIG. 1. This acrylamide formation in heated foods can be reduced by removing the asparagine or converting the asparagine in the food to another substance before heating. When such foods containing reduced levels of asparagine are heated, the amount of acrylamide formed is also reduced. Reducing the level of acrylamide present in the finished food product is accomplished by adding an enzyme that hydrolyzes the amide group on the side chain of asparagine prior to heating (e.g., cooking). The addition of such an enzyme degrades the side chain of asparagine, thus preventing the asparagine from forming acrylamide. In doing so, the amide bond is hydrolyzed and asparagine is converted to aspartic acid. This reaction mechanism is set forth in FIG. 2.

Applicant has found that while an asparagine-reducing enzyme, for example asparaginase, will readily hydrolyze asparagine in a liquid system (for example, in a solution in a test tube), the enzyme is much less effective in solid or semi-solid materials which is the form most foods are in. Applicant has also found that a limiting factor for the rate of the asparagine hydrolysis reaction in solid or semi-solid foods is the movement (diffusion) of asparagine molecules through the medium to the asparaginase molecules. In solid or semisolid foods, the movement through the medium can be very slow, in fact too slow to result in the expected reduction of acrylamide based on tests in liquid systems.

Applicant has surprisingly found that some doughs have little free water (unbound water) and that increasing the amount of water in the dough can allow the reaction of the asparaginase molecules with the asparagine molecules to effectively proceed. Increasing the amount of water in the dough increases the amount of free water in the dough, which also increases the mobility (diffusion) of the asparaginase and asparagine molecules in the dough. The amount of free (unbound) water in foods is commonly measured by a parameter known as water activity. Water activity (a_{w}) is a thermodynamic property of the food material that measures the ratio of free water in the food material vs. the total amount of water in the food material. If the amount of free water is the same as the total amount of water in the food material, the a_{w} is equal to 1. Water activity is measured by a commercially available water activity meter. Such meters are known to those skilled in the art, for example the PawKit meter, and they can be purchased from various suppliers such as AquaLab® (see for example www.decagon.com). If all of the water in the material is bound to other components in the food material, the water activity is very low. For example, margarine contains about 20% water by weight, and its a_{w} is around 0.9, indicating that most of the water is free water. By contrast, dried fruit can contain 20% water, but its a_{w} is around 0.6, indicating that a large portion of the water is bound water. Applicant has found that if the water activity is less than about 0.85, preferably greater than about 0.90 in a medium comprising an asparagine-containing food component, the asparaginase effectiveness will be very low. By contrast, if the a_{w} is greater than around 0.85, preferably greater than about 0.90, the asparaginase effectiveness in hydrolyzing asparagine to aspartic acid is greatly increased, which in turn leads to a lower acrylamide level in the heated dough-based food product.

The present invention provides methods for reducing the level of asparagine in an asparagine containing dough food as disclosed in the claims. The methods comprise providing an asparagine-reducing enzyme in combination with at least one asparagine-containing dough food component in a medium having a water activity greater than 0.99.

As used herein, "asparagine-containing dough food component" includes, but is not limited to, any edible material containing asparagine that is used in the preparation of a dough-based food product, including mixtures of two or more dough food components containing asparagine. Examples of asparagine-containing dough food components include, but are not limited to, tuber-based dough food components, root-based food components, wheat-based dough food components, corn-based dough food components, grain dough food components or combinations thereof. One skilled in the art will appreciate the various forms in which the asparagine-containing dough food component may be provided, any of which may be employed herein. Such forms, include, but are not limited to, mash, flakes, granules, flanules, powder, flour or a combination thereof.

As used herein, "asparagine-reducing enzyme" includes any enzyme capable of reducing the level of asparagine in an asparagine-containing food product. In one embodiment, the asparagine-reducing enzyme comprises an enzyme capable of hydrolyzing the amide group of free asparagine to prevent the formation of acrylamide. In another embodiment, the enzyme comprises deamidases that have asparagine-reducing functionality. In yet another embodiment, the enzyme for use herein is asparaginase. One source of asparaginase is Sigma-Aldrich, catalog #A2925, although other asparaginase products are commercially available and suitable for use herein. Asparaginase can be produced commercially from a process involving microorganisms that produce asparagine in their cells over the course of their growth. Typical microorganisms that can be used to produce asparaginase include, but are not limited to, E. coli., Aspargillus oryzae, and Aspargillus niger. As used herein, the terms "asparagine-reducing enzyme" and "enzyme" include one or more enzymes; for example, a mixture of two or more enzymes is encompassed by the terms.

The asparagine-reducing enzyme is provided in combination with at least one asparagine-containing dough food component in a medium. As used herein the term "medium" refers to the composition in which the asparagine-containing dough food component and the enzyme are combined. The medium may consist of the asparagine-containing dough food component and the enzyme, or may include additional components, including, but not limited to, one or more additional dough ingredients, carrier, water, emulsifier, or mixtures thereof. Examples of additional dough ingredients include, but are not limited to, starch, flour, leavening agents, sugars or combinations thereof. Starch may include, but is not limited to, any suitable native or modified starch, including any dried potato products that are added into or back into the mash. Examples of emulsifiers include, but are not limited to, glycerol esters of fatty acids, lecithins, arabinogalactan, carrageenan salts of carrageenan, furcelleran, salts of furcelleran, xanthan gum, stearyl monoglyceridyl citrate succistearin (stearoyl propylene glycol hydrogen succinate), hydroxylated lecithin sodium lauryl sulfate, succinylated monoglycerides, ethoxylated mono- and diglycerides, polysorbate, polysorbate 65, polysorbate 80, sorbitan monostearate, sodium stearoyl lactylate, lactylic esters of fatty acids lactylated fatty acid esters of glycerol and propylene glycol, glyceryl-lacto esters of fatty acids, polyglycerol esters of fatty acids, propylene glycol alginate, sucrose fatty acid esters, salts of fatty acids, sucrose oligoesters, hydroxypropyl cellulose hydroxypropyl methylcellulose, food starch-modified, and bakers yeast glycan.

The enzyme may be provided to the medium in any suitable form and one skilled in the art will appreciate the various forms, any of which may be employed herein. In one embodiment, the enzyme is provided in the form of a powder. In another embodiment, the enzyme is provided in the form of a solution. One skilled in the art will also appreciate that various methods may be used to provide the enzyme to the medium, any of which may be employed herein. For example, the enzyme may be provided directly or indirectly to the medium by sprinkling, pouring, mixing with or without the use of an agitator, kneading or spraying or combinations thereof. As used herein, "providing" the enzyme to the medium includes, but is not limited to, any means of bringing the asparagine-containing dough food component and the enzyme together.

As discussed in detail above, asparagine diffusion through a medium comprising an asparagine-containing dough food component is a strong function of the amount of free water in the medium. As such, the water activity of a given medium will depend not only on the total amount of water in the medium but also on the other food components composing the medium. In the case of dough-based food products, much of the product comprises starches, sugars, other polysaccharides and fibers, which are well known to bind water. Therefore, while not wishing to be bound by theory, it is believed that the water activity in the medium comprising an asparagine-containing dough food component may need to be adjusted to ensure a water activity of sufficient magnitude to allow effective asparaginase activity.

As noted above, a medium comprising an asparagine-containing food component with a water activity of greater than 0.85, preferably greater than about 0.90greatly increases the asparagine-reducing enzyme activity. The water activity of the medium may be varied, if necessary, before and/or when the enzyme is provided to the medium to ensure that the medium has a sufficient water activity. One skilled in the art will appreciate the various methods for varying and measuring water activity in a food component or food product, any of which may be employed herein. The water activity of the medium is greater than 0.99. In a further embodiment, the water activity of the medium is about 1.00

To ensure a water activity of sufficient magnitude to allow effective asparaginase activity, additional dough ingredients may be added to the medium comprising the asparagine-containing dough food component before, during and/or after the asparaginase treatment. For example, by mixing only water, enzyme and dough food components that contain asparagine during the asparaginase treatment, the water activity may be kept higher than if including all the components of the dough before treatment. In addition, by keeping out some dough ingredients that may bind water until after the asparaginase treatment, the effectiveness of the asparaginase treatment will also be increased.

One skilled in the art will appreciate the various dough food components that may be combined in a medium according to the present invention. The medium comprises an emulsifier, water, an asparagine-reducing enzyme and at least one asparagine-containing dough food component. In yet another embodiment, the medium comprises water, an asparagine-reducing enzyme, at least one asparagine-containing food component, at least one additional dough ingredient and an emulsifier. An emulsifier is added to the medium as a processing aid. One skilled in the art will also appreciate that the ratio of the various dough food components in the medium may be varied before, during and/or after the enzyme is provided to the medium depending upon the type of asparagine-containing dough food components, the composition of the medium, the desired process, and the desired level of acrylamide in the finished dough-based food product.

As is known in the art, enzymes are marketed by units of activity, rather than by weight or volume. Thus, the effective amount of enzyme required to achieve the desired level of asparagine reduction in the asparagine-containing dough food component and acrylamide reduction in the finished dough-based food product will depend upon the activity of the particular enzyme product used (for example, the particular enzyme's ability to degrade asparagine). The amount of enzyme to add can also depend upon the amount of asparagine present in the asparagine-containing dough food component. A dough food component higher in asparagine will generally require increased levels of enzyme or increased reaction time to achieve the same level of asparagine and acrylamide reduction. The amount of enzyme to add can also depend upon the particular dough food component treated (e.g., chemical composition, amount of asparagine present, particle size, water activity, density, viscosity). One skilled in the art will be able to determine the effective amount of enzyme required based upon the specific asparagine-containing dough food component, the specific enzyme, the enzyme's specific activity and the desired result.

In addition, pH and temperature are factors that affect enzymatic activity. In one embodiment, the medium is cooled to at least about 70° C before the enzyme is added.

The amount of time needed to maintain the medium under conditions sufficient to reduce the level of asparagine in the asparagine-containing dough food component will depend upon factors including, but not limited to, the water activity of the medium, the temperature of the medium, the desired level of acrylamide reduction, the characteristics of the particular asparagine-containing dough food component, the particular enzyme added, the amount of mixing or kneading of the dough material, and the amount of enzyme added. Shorter reaction times will typically require higher amounts of enzyme to achieve a desired reduction in acrylamide in the dough-based food product. Also, the longer the enzyme is maintained in the medium, the greater the level of asparagine reduction and thus the greater the level of acrylamide reduction in a food product made from the component. In addition, the holding time to allow the enzyme to react with the asparagine may be effected in any suitable manner; for example, it can be carried out simultaneously with adding the enzyme to the medium, mixing the enzyme with the dough food components or combinations thereof.

In one embodiment, the medium is maintained from about 5 minutes to about 120 minutes under conditions sufficient to reduce the level of asparagine in the asparagine-containing dough food component to a desired level. In another embodiment, the medium is maintained for at least about 10 minutes. In yet another embodiment, the medium is maintained for about 20 minutes. In a further embodiment, the medium is maintained for about 40 minutes. In yet another embodiment, the medium is maintained for about 60 minutes. In a further embodiment, the medium is maintained for at least about 80 minutes.

The medium may also be stirred, kneaded or otherwise mixed before, during and/or after the enzyme is provided. The amount of time needed, if any, for mixing the medium will also depend upon factors including, but not limited to, the desired level of asparagine and/or acrylamide reduction, the level of asparagine, the characteristics of the particular asparagine-containing dough food component, the particular enzyme added and/or the characteristics of the enzyme added. In one embodiment, the medium is mixed from about 30 seconds to about 30 minutes. In another embodiment, the medium is mixed for about 1 minute. In another embodiment, the medium is mixed for about 5 minutes. In yet another embodiment, the medium is mixed for about 10 minutes. In a further embodiment, the medium is mixed for about 20 minutes.

After the enzyme has been maintained in the medium for the desired amount of time, the level of asparagine reduction may be determined by measuring the amount of asparagine in the asparagine-containing dough food component after enzyme treatment. One skilled in the art will appreciate the various methods for measuring the level of asparagine reduction, any of which may be employed herein. The level of asparagine reduction may be characterized as the percent reduction based on a comparison of the asparagine level with and without an asparagine-reducing enzyme treatment. The enzyme is allowed to react until the level of asparagine is reduced by at least 95%.

After the asparagine has been reduced to the desired level, the enzyme can optionally be inactivated and/or removed from the medium. The enzyme can be deactivated by any suitable means that inactivates the enzyme. For example, the enzyme can be deactivated through the use of heat, pH adjustment, treatment with a protease, or combinations thereof. Thus, when deactivating the enzyme through heating, the optional deactivation step and the cooking step, as discussed in detail below, may be carried out simultaneously. Heat processing via cooking can also denature and inactivate the enzyme such that the dough is not subjected to continuing enzymatic activity. Furthermore, the enzyme can be removed by any suitable means including, but not limited to, extraction.

After the level of asparagine has been reduced to the desired level, the medium comprising the dough food components may also be dried. In one embodiment, the medium is dried until the moisture level is about 50%. In another embodiment, the medium is dried until the moisture level is about 40%. In a further embodiment, the medium is dried until the moisture level is about 30%.

As used herein the term "dough-based food product" includes, but is not limited to, dough-based foods ready for consumption and dough-based foods to be used as ingredients to prepare other foods. Dough-based food products include, but are not limited to, potato snacks, potato crisps, wheat-based products such as bread, crackers, biscuits and cookies, rye-based products such as breads, crackers and crisp breads, corn based products such as tortillas, tortilla chips, extruded corn-based snacks and corn breads, breakfast cereals derived from wheat, corn, rye, rice or combinations thereof, snack bars derived from wheat, corn, rye, rice or combinations thereof, pizza crusts and toaster pastries.

The step of reducing the level of asparagine in an asparagine-containing dough food component is discussed in detail above and any of such methods may be employed herein. After the level of asparagine has been reduced to the desired level, the dough food component may be dried, if it is desired to reduce the moisture level of the dough. The dough may be dried before, during and/or after the addition of other dough food components. One skilled in the art will appreciate the various methods for drying the dough, any of which may be employed herein. Drying methods include, but are not limited to, baking, frying, extruding, drying via vacuum oven or drum dryer, puffing or microwaving. Drying methods may include those that reduce the amount of total thermal input. For example, freeze drying, drum drying, resonant or pulse flow drying, infrared drying, or a combination thereof is preferred when producing flakes; and air lift drying, fluidized bed drying, or a combination thereof when producing granules.

After the optional drying, the dough food component is formed into a dough-based food product. One skilled in the art will appreciate the various methods for forming a dough food component into a dough-based food product, any of which may be employed herein. Cooking can be performed by any suitable method, for instance by frying, baking, or a combination of frying or baking. Furthermore, the forming and cooking steps can be carried out simultaneously, such as with extruded snack products.

Depending upon the various factors set forth above, the final dough-based food product prepared, according to the present invention, may have a reduction in the level of acrylamide from at least about 10% to at least about 90%, as compared with dough-based food products that do not include a dough food component having asparagine-reducing enzyme treatment, but rather include a non-treated asparagine-containing dough food component. One skilled in the art will appreciate the various methods for measuring level of acrylamide in a food product, any of which may be employed herein. In one embodiment, the level of acrylamide is reduced by at least about 30%. In yet another embodiment, the level of acrylamide is reduced by at least about 50%. In a further embodiment, the level of acrylamide is reduced at least about 70%. In yet a further embodiment, the level of acrylamide is reduced by at least about 90%. In yet another embodiment, the level of acrylamide is reduced by at least about 95%. In yet a further embodiment, the level of acrylamide is reduced by at least about 99%. The level of acrylamide may also be measured in parts per billion (ppb). The level of acrylamide is reduced to less than 100 ppb. In another embodiment, the level of acrylamide is reduced to less than 50 ppb.

Dough-based food products with reduced acrylamide levels are also described. The final amount of acrylamide in the dough-based food product may vary depending on the various factors set forth above. The dough-based food product has less than 100 ppb. In a further embodiment, the dough-based food product has less than about 50 ppb. In yet a further embodiment, the dough-based food product has less than about 10 ppb.

The methods of the present invention can be applied in the production of any suitable dough-based food product, including but not limited to carbohydrate-containing foods. For example, the methods can be used to reduce the level of acrylamide found in potato snacks, potato crisps, wheat-based products such as bread, crackers, biscuits, pretzels and cookies, rye-based products such as breads, crackers and crisp breads, corn based products such as tortillas, tortilla chips, extruded corn-based snacks and corn breads, breakfast cereals derived from wheat, corn, rye, rice or combinations thereof, snack bars derived from wheat, corn, rye, rice or combinations thereof, pizza crusts and toaster pastries.

The present invention may be practiced by any suitable means. For example, the methods herein may be practiced in batch, semi-batch or continuous mode. Analytical Methods

Parameters used to characterize elements of the present invention are quantified by particular analytical methods. These methods are described in detail as follows.

Methods for measuring acrylamide (AA) in food products and the determination of asparagine and aspartic acid in food and beverage products are summarized in detail in Zyzak et al, US Patent Application No. 2004/0058046 A1.

### EXAMPLES

The following examples are illustrative of the present invention but are not meant to be limiting thereof.

Examples 1 through 4 are performed as a set of experiments

### Example 1 (comparative example) Materials

Potato flakes, water, other dry ingredients, and emulsifier.

### Apparatus

Fryer with oil, disposable gloves, balance, 400 ml beaker, 150 ml beaker, small spatula, Cuisinart Little Pro Plus ™ food processor, disposable plates, aluminum foil, sheeting rolls, cutting board, doval cutting die, fryer mold, and paper towels.

### Procedure

1. Fill fryer with oil to between min and max marks, if not already done. Set out 3 disposable plates with paper towels on them.
2. Turn on fryer power switch and set dial to 190.5° C (375° F).
3. Put a 400 ml beaker on balance and tare.
4. Weigh out the dry materials (+ 0.02 g) in the 400 ml beaker.
5. Add the dry materials to the food processor. Put on cover and mix for 30 seconds.
6. Put 150 ml beaker on balance and tare.
7. Add about 44 g water and emulsifier.
8. Put beaker with water and emulsifier in microwave oven and heat for about 20 to 30 seconds.
9. With dry ingredients still in the processor simultaneously turn on the timer and the food processor.
10. Add the warm water and emulsifier to the food processor bowl through the chute.
11. Continue to mix 1 minute, then stop.
12. Take off the top cover of the food processor, and dump the crumbly dough onto a disposable plate. Take out the blade from the dough and set aside. Cover the dough with aluminum foil, and take to the sheeting rolls.
13. Dump the crumbly dough between the two rolls and run the dough through the rollers to form a sheet.
14. Fold up the sheet, set on a disposable plate, cover with foil and take to the cutting board.
15. Cut out about 20 dovals from the sheet with the doval cutting on the cutting board. Place 2 in a small plastic bag. (16 dovals should be fried for sample analysis so there are 2 extra in case of a mistake.)
16. Cover the remaining dovals with foil and take to the fryer. Be sure to have gloves on by this time.
17. Lift the top of the fryer mold and place a doval in the center. Set the timer for 12 seconds.
18. Simultaneously start the timer, and lower the mold with the doval to the bottom of the fryer. When the timer beeps, immediately lift out the mold from the oil. Turn the mold sideways over the fryer to drain the bulk of the oil, then place it on a disposable plate with paper towels.
19. Lift up the top of the mold, take a small metal spatula, and pop out the fried chip. Set aside on a separate disposable plate with paper towels.
20. Repeat this procedure to make at least 16 fried chips.
21. Place the chips in a plastic bag. Put a label on the bag sample number.
22. Analyze the chips for acrylamide level.

The water activity of the dough prior to frying is about 0.95. The acrylamide level in the fried chips is determined to be about 1688 µg/kg.

### Example 2 (comparative example)

1. Weigh out the dry ingredients in a 400 ml beaker. Add the dry ingredients to the food processor and mix for about 30 seconds. Weigh out about 20 g of water in a 100 mL beaker along with the emulsifier. Put beaker with water and emulsifier in microwave oven and heat for about 10 seconds.
2. With dry ingredients still in the processor simultaneously turn on the timer and the food processor.
3. Add the warm water and emulsifier to the food processor bowl through the chute. Continue to mix for 30 seconds then stop.
4.. Weigh out about 24 g of water in a 100 mL beaker along with about 136 units of asparaginase derived from Aspergillus oryzae. Add this to the dough in the food processor and mix for about 30 seconds. The total amount of water added to the dough in Example 1 was about 44 g. The total amount of water added to the dough in this example is about 44 g, the same as Example 1.
5. Hold the dough about 20 minutes to let the enzyme act on the dough.
6. Take off the top cover of the food processor, and dump the crumbly dough onto a disposable plate. Take out the blade from the dough and set aside. Cover the dough with aluminum foil, and take to the sheeting rolls.
7. Dump the crumbly dough between the two rolls and run the dough through the rollers to form a sheet.
8. Fold up the sheet, set on a disposable plate, cover with foil and take to the cutting board.
9. Cut out 20 dovals from the sheet with the doval cutting on the cutting board. Place 2 in a small plastic bag. (16 dovals need to be fried so there are 2 extra for mistakes.)
10. Cover the remaining dovals with foil and take to the fryer. Be sure to have gloves on by this time.
11. Lift the top of the fryer mold and place a doval in the center. Set the timer for 12 seconds.
12. Simultaneously start the timer, and lower the mold with the doval to the bottom of the fryer. When the timer beeps, immediately lift out the mold from the oil. Turn the mold sideways over the fryer to drain the bulk of the oil, then place it on a disposable plate with paper towels.
13. Lift up the top of the mold, take a small metal spatula, and pop out the fried chip. Set aside on a separate disposable plate with paper towels.
14. Repeat this procedure to make at least 16 fried chips.
15. Place the chips in a plastic bag. Put a label on the bag sample number.
16. Analyze the chips for acrylamide level.

The water activity of the dough just prior to frying is about 0.95. The acrylamide level in the fried chips is determined to be about 831 µg/kg.

### Example 3 (comparative example)

The procedure of Example 2 is repeated except that about 39 g of water is mixed with the enzyme in step 5. The total amount of water added to the dough at the end of step 5 is about 59 g. After mixing in the food processor, weigh the dough and food processor and record the weight. Hold the dough about 20 minutes to let the enzyme act on the dough, then weigh again. Take off the top of the food processor, and place the food processor with dough in a 50 C oven and dry the dough until the total weight has dropped 15 grams. Stir every 5 minutes. The dough will now have the same moisture level as the dough in Examples 1A and 1B. The dough is then dumped onto a disposable plate, sheeted, cut into dovals, fried, and analyzed as in Examples 1 and 2.

The water activity in the dough prior to frying is about 0.99.

### Example 4

The procedure of Example 3 is repeated except that about 54 g of water is mixed with the enzyme in step 5. The total amount of water added to the dough at the end of step 5 is about 74 g. All other steps are the same as Example 2

The water activity in the dough prior to frying is about 1.00 The acrylamide level in these chips is determined to be about 60 µg/kg.
Examples 5 and 6 are performed as a set of experiments
Potato flakes are made from potato mash. Potato mash is about 80% water, and the water activity of the potato mash is about 1.00. This example will show that adding asparaginase to the high water activity potato mash during the potato flake making process is effective in reducing the level of acrylamide in fried chips made from these flakes.

### Example 5 (comparative example) Make potato flakes

1. Set a constant temperature bath for 60° C.
2. Peel 3 medium Russet Burbank potatoes, and slice into 1/4 inch slices using a meat slicer.
3. Steam the potato slices in a steamer about 20 minutes.
4. Rice the steamed potatoes into a mixing bowl. Measure the temperature and ensure the temperature is about 60° C.
5. Mix in about 10 g water in about 368 g potato mash for one minute
6. Cover the bowl, place it in the constant temperature bath (60° C) for about15 minutes, then measure and record the temperature.
7. Re-rice the mash on a cookie sheet an immediately dry in a pizza oven until the product moisture is reduced to about 7%
8. Grind the dried product in a blender and sieve to 30 mesh.
9. Use these potato flakes and repeat the procedure of Example 1A to make fried chips.

The acrylamide level in these chips is determined to be about 1453 µg/kg.

### Example 6

The procedure of Example 5 is repeated except that about 20 microliters of A. oryzae asparagine solution (6800 units per milliliter of solution) per 368 g potato mash is added to the water in Step 5. The water activity of the potato mash is about 1.00.

The acrylamide level in these chips is determined to be about 64 µg/kg.

## Claims

1. A method for producing a dough-based food product with a level of acrylamide reduced to less than 100 ppb, comprising
(1) providing an asparagine-reducing enzyme in combination with at least one asparagine-containing dough food component in a medium, wherein the medium comprises an emulsifier, water, the enzyme, and the at least one asparagine-containing dough food component,
adjusting the water activity of the medium so that the water activity is greater than 0.99, and
allowing the enzyme to react until the level of asparagine is reduced by at least 95%;
(2) heating the dough food component; and
(3) forming the dough food component into a dough-based food product.

2. The method of claim 1, wherein the asparagine-reducing enzyme is asparaginase.

3. The method of claim 1 or 2, wherein the medium comprises water, the enzyme, the at least one asparagine-containing dough food component and at least one additional dough ingredient.

4. The method of any one of claims 1 to 3, wherein the medium is mixed before, during and/or after the asparagine-reducing enzyme is added.

5. The method of any one of claims 1 to 4, wherein the at least one asparagine-containing dough food component comprises a tuber-based dough food component, a root-based dough food component, or a combination thereof.

6. The method of any one of claims 1 to 5, wherein the moisture level of the medium is greater than 50%.

7. The method of any of claims 1 to 6, further comprising drying the medium until the moisture level of the medium is from 30% to 50%, wherein the drying step is performed after the asparagine is reduced to the desired level.

## Patentansprüche

1. Verfahren zur Herstellung eines teigbasierten Nahrungsmittelprodukts mit einem auf weniger als 100 ppb reduzierten Gehalt an Acrylamid, umfassend
(1) Bereitstellen eines Asparagin-reduzierenden Enzyms in Kombination mit mindestens einer Asparagin-enthaltender Teignahrungsmittelkomponente in einem Medium, wobei das Medium einen Emulgator, Wasser, das Enzym und die mindestens eine Asparagin-enthaltende Teignahrungsmittelkomponente umfasst,
Anpassen der Wasseraktivität des Mediums in solcher Weise, dass die Wasseraktivität größer als 0,99 ist, und
Reagierenlassen des Enzyms, bis der Gehalt an Asparagin um mindestens 95% verringert ist;
(2) Erhitzen der Teignahrungsmittelkomponente; und
(3) Formen der Teignahrungsmittelkomponente zu einem teigbasierten Nahrungsmittelprodukt.

2. Verfahren nach Anspruch 1, worin das Asparagin-reduzierende Enzym Asparaginase ist.

3. Verfahren nach Anspruch 1 oder 2, worin das Medium Wasser, das Enzym, die mindestens eine Asparagin-enthaltende Teignahrungsmittelkomponente und mindestens eine zusätzliche Teigzutat umfasst.

4. Verfahren nach einem der Ansprüche 1 bis 3, worin das Medium gemischt wird, bevor, während und/oder nachdem das Asparagin-reduzierende Enzym zugegeben wird.

5. Verfahren nach einem der Ansprüche 1 bis 4, worin die mindestens eine Asparagin-enthaltende Teignahrungsmittelkomponente eine Wurzelknollen-basierte Teignahrungsmittelkomponente, eine Wurzel-basierte Teignahrungsmittelkomponente oder eine Kombination hiervon umfasst.

6. Verfahren nach einem der Ansprüche 1 bis 5, worin der Feuchtigkeitsgehalt des Mediums größer als 50% ist.

7. Verfahren nach einem der Ansprüche 1 bis 6, weiter umfassend das Trocknen des Mediums, bis der Feuchtigkeitsgehalt des Mediums zwischen 30 und 50% beträgt, wobei der Trocknungsschritt durchgeführt wird, nachdem das Asparagin auf den gewünschten Gehalt reduziert wurde.

## Revendications

1. Procédé de production d'un produit alimentaire à base de pâte avec un niveau d'acrylamide réduit à moins de 100 ppb, comprenant
(1) la fourniture d'une enzyme réduisant l'asparagine en combinaison avec au moins un composant alimentaire de pâte contenant de l'asparagine dans un milieu, dans lequel le milieu comprend un émulsifiant, de l'eau, l'enzyme, et l'au moins un composant alimentaire de pâte contenant de l'asparagine,
l'ajustement de l'activité de l'eau du milieu de sorte que l'activité de l'eau soit supérieure à 0,99, et
le fait de permettre à l'enzyme de réagir jusqu'à ce que le niveau d'asparagine soit réduit d'au moins 95 % ;
(2) le chauffage du composant alimentaire de pâte ; et
(3) la formation du composant alimentaire de pâte en un produit alimentaire à base de pâte.

2. Procédé selon la revendication 1, dans lequel l'enzyme réduisant l'asparagine est l'asparaginase.

3. Procédé selon la revendication 1 ou 2, dans lequel le milieu comprend de l'eau, l'enzyme, l'au moins un composant alimentaire de pâte contenant de l'asparagine et au moins un ingrédient de pâte supplémentaire.

4. Procédé selon l'une quelconque des revendications 1 à 3, dans lequel le milieu est mélangé avant, pendant et/ou après l'addition de l'enzyme réduisant l'asparagine.

5. Procédé selon l'une quelconque des revendications 1 à 4, dans lequel l'au moins un composant alimentaire de pâte contenant de l'asparagine comprend un composant alimentaire de pâte à base de tubercule, un composant alimentaire de pâte à base de racine, ou une combinaison de ceux-ci.

6. Procédé selon l'une quelconque des revendications 1 à 5, dans lequel le niveau d'humidité du milieu est supérieur à 50 %.

7. Procédé selon l'une quelconque des revendications 1 à 6, comprenant en outre le séchage du milieu jusqu'à ce que le niveau d'humidité du milieu soit de 30 % à 50 %, dans lequel l'étape de séchage est réalisée après la réduction de l'asparagine au niveau souhaité.
